# EUROPEAN PATENT APPLICATION

(11) **EP 3 144 793 A1**
(43) Date of publication of application: **22.03.2017**
(21) Application number: 15306427.4
(22) Date of filing: 16.09.2015
(51) Int. Cl.: G06F 3/0482, H04N 1/00

(54) **METHOD AND APPARATUS FOR AN IMAGE EDITOR**

(71) Applicant: Thomson Licensing, 92130 Issy-les-Moulineaux (FR)
(72) Inventor: FRADET, Matthieu, 35576 Cesson-Sévigné (FR); MARQUANT, Gwenaëlle, 35576 Cesson-Sévigné (FR); DEMOULIN, Vincent, 35576 Cesson-Sévigné (FR)
(74) Representative: Huchet, Anne

(57) **Abstract**

A method for displaying a menu of editing functions within a user interface of an image editing tool includes receiving an image and associated metadata captured by a camera (305). The metadata associated with the image are extracted and filtered to reveal metadata related to the photographer's intent (310, 315). The photographer's intent metadata are used to generate one or more selectable image editing functions to be performed by the image editing tool (320). The one or more image editing functions are displayed as editing selections on the user interface of the image editing tool (325).

## Description

### FIELD

The present disclosure relates to image editing, specifically image editing based on image metadata.

### BACKGROUND

This disclosure relates to the domain of supervised image editing or video editing. Many editing software packages already exist and allow the user to post-process/retouch images or videos (e.g. Photoshop, GIMP just to name two of them). However, the larger and more expansive the variety of processing offered by the program, the more the program becomes too complex to be utilized easily by the non-expert user. Accessing and applying the desired processing tool/filter becomes tedious for the non-expert user who often feels lost facing lists of increasingly long possible processing capabilities and interface menus that are more and more convoluted. To clear a path in these non-intuitive and non-user-friendly menus, the consumer has no other choice than to waste some time searching in the manual, reading forums, watching tutorials, and the like. So a technical problem to be solved is how to adapt the graphical user interface (GUI) of an image/video editing software so that the user may access more easily to the tools that he will probably want to apply.

### SUMMARY

This summary is provided to introduce a selection of concepts in a simplified form as a prelude to the more detailed description that is presented later. The summary is not intended to identify key or essential features of the invention, nor is it intended to delineate the scope of the claimed subject matter.

In one aspect of the configuration, a method is provided for displaying a menu of editing functions within a user interface of an image editing tool. The method is performed by an apparatus having the image editing tool. An image is captured by a camera, the image having associated metadata concerning the image. The associated metadata is extracted from the image data and filtered to select metadata related to photographer's intent. The selected metadata is processed to determine one or more selectable image editing functions to be performed by the image editing tool. The one or more image editing functions are displayed as editing selections on the user interface of the image editing tool.

In another aspect, the invention concerns a method for selecting editing functions in an image editing tool, the method performed by an apparatus that includes the image editing tool, the method comprising:
processing metadata associated with an image to be edited in said image editing tool to determine one or more selectable image editing functions to be performed by the image editing tool; and
providing said selected image editing functions to edit said image.

Additional features and advantages of the invention will be made apparent from the following detailed description of illustrative embodiments which proceeds with reference to the accompanying figures. It should be understood that the drawings are for purposes of illustrating the concepts of the disclosure and are not necessarily the only possible configuration for illustrating the disclosure.

### BRIEF DESCRIPTION OF THE DRAWINGS

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.
Figure 1 depicts a functional block diagram of the disclosed configuration;
Figure 2 depicts a software structure of the disclosed configuration;
Figure 3 depicts an example flow diagram of a method using the disclosed configuration; and
Figure 4 depicts an example apparatus having features of the configuration.

### DETAILED DISCUSSION OF THE EMBODIMENTS

In the following description of various illustrative embodiments, reference is made to the accompanying drawings, which form a part thereof, and in which is shown, by way of illustration, how various embodiments in the inventive configuration may be practiced. It is to be understood that other embodiments may be utilized and structural and functional modifications may be made without departing from the scope of the configuration.

In one aspect of the disclosure, metadata is exploited, such as exchangeable image file (EXIF) metadata, which are stored in picture files. Taking into account these data means taking into account personalized user settings directly related to the content itself and/or to the initial artistic intention or expression of the photographer. From these metadata, a list of editing functions, such as effects and filters, are generated using the configuration described herein that will be highlighted in the graphical user interface (GUI) of image editing software so that the editing functions will be suggested to the user. In one possible utility to the user, editing functions of the image editing software can be made more easily accessible.

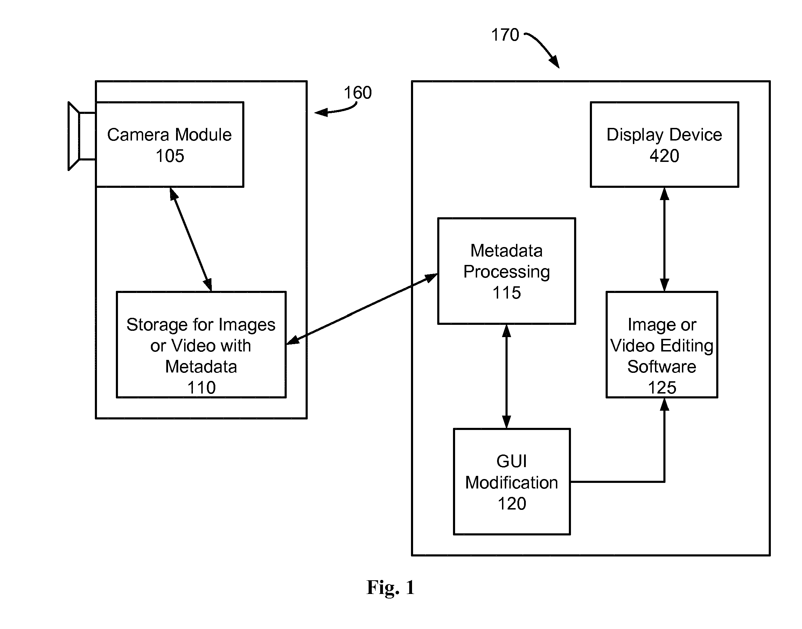

Figure 1 depicts a functional block diagram 100 of the disclosed configuration. An image capture device 160, having a camera module 105 may be used to capture a single image or a video. The image data is the image stored in a storage medium 110. The storage medium stores the image data as well as metadata related to the image. Typically, such storage can be either associated with the camera 105 or separate. Figure 1 indicates an embodiment where the image capture device 160 includes both the camera module 105 and the storage for the images and metadata 110. However, the storage 110 may be separate as in the case of a portable or removable memory device such as a USB device, a SD memory card, and the like.

The metadata stored in the storage 110 is generated by the camera module 105 at the time the image is generated. The metadata may be generated in any format. Several standards for image metadata exist such as Exchangeable Image File Format (EXIF), International Press Telecommunications Council format (IPTC) and Extensible Metadata Platform (XMP). Metadata captured with a camera module using the EXIF format can vary according to camera manufacturer and model. IPTC and XMP formats allow users to add their own descriptive information within a digital photo or image file. These metadata might include the characteristics of the photo, copyright information, caption, credits, keywords, and special instructions. Generally, metadata may be modified either before or after image capture. Thus, the metadata representing photographer's intent could also be found in metadata edited/added after the capture time, and even by somebody other than the photographer himself. The currently discussed configuration can be used with either the metadata originally produced at the time of capture or metadata that is later edited.

Metadata may be distinguished into three groups.
A. Metadata that do not relate to photographer's intent:
   For example, camera manufacturer, model, software, EXIF version, tags related to image data structure (such as image dimensions, compression, and the like).
B. Metadata that explicitly relate to photographer's intent:
   For example, orientation, compulsory flash firing/suppression, manual exposure, manual white-balance, manual scene capture type (landscape/portrait/night scene), scene type, and the like.
C. Metadata that implicitly relate to photographer's intent:
   Tags related to picture-taking conditions: for example, in case of manual exposure: shutter speed, aperture, and the like.

The image processing device 170 of Figure 1 contains elements that contribute to the functionality of the current configuration. Metadata processing unit 115 receives information obtained from the storage 110. The information from storage 110 includes image data, still image or video data, plus metadata associated with the image data. Metadata processing unit 115 extracts the metadata associated with the image data that is subject to editing. The metadata associated with the image data that is subject to editing is parsed and filtered to select metadata related to the photographer's intent. Other metadata may be used as well, but metadata related to the photographer's intent is used for subsequent processing.

The metadata related to the photographer's intent is generally identified as that metadata that is either implicitly or explicitly relevant as expressed by example above. Using this relevant metadata, GUI modification module 120 can determine editing functions that relate to such metadata. For example, the GUI modification module can determine if a landscape view camera setting was used and if an adjustable exposure resulted in a picture that is too bright or dark. As a result, a brightness editing function may be suggested. If a portrait view camera setting was used, the suggestion of a red eye removal editing function is another example. In case of a manual setting of the lens aperture at a high value, a sharpening editing tool may be suggested. In case of a very high ISO setting value indicating most likely a capture in a dark environment, a noise removal editing tool may be suggested. Other photographer's intent metadata parameters, such as ISO setting, flash setting, orientation, exposure, resolution, and the like are compared to each other to define possible editing functions for the particular image and the particular metadata associated with the image.

Graphical User Interface (GUI) modification unit 120 of Figure 1 accepts the possible editing functions and generates a list of editing functions to send to the image or video editing software 125 of the image editing device 170. The GUI modification unit 120 may edit the functions based on the capabilities of the image or video editing software 125 installed on the image editing device 170. On one example, five possible image editing functions may have determined from the extracted metadata, but the GUI modification ascertains that only four of the five image editing functions are available within the capabilities of the image editing software 125. Accordingly the GUI modification unit 120 reduces the list to the four image processing functions that are available within the capabilities of the image editing software 125.

The list of possible image editing functions that can be exercised by the image editing software 125 are transferred from the GUI modification unit 120 to the image editing software 125. Image editing device 170 can then display the image editing functions as possible selections for modifying the image. Display 420 presents the editing function selections to a user of the image editing device. Thus, the functions displayed are a result of the image metadata associated with the image data or video data that is subject to editing. In one embodiment, the display of the possible editing functions provided via analysis of the metadata related to the image data subject to editing can be produced via an add-on of the image or video editing software 125. For example, the modification of the GUI can be presented as a tab that may be opened, a list to be displayed, and the like. The tab or list may be introduced to the image software tool 125 as a second party add-on compatible with the image editing software tool 125.

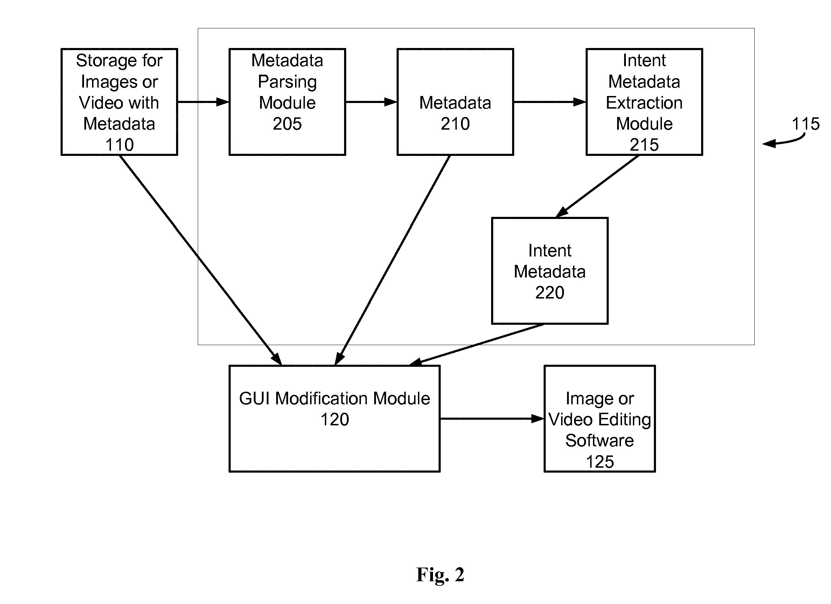

Figure 2 depicts a functional diagram 200 representing functions or modules, either in hardware or software or both, according to one embodiment of the current configuration. Specifically, metadata processing unit 115 is further developed in Figure 2. Storage for images or video with metadata 110 may be embodied in a storage element such as solid state memory, disc memory, or optical memory. The information of the storage 110 contains image or video data having metadata associated with the image data that is the subject of an editing process. This image data, once selected for editing, is made available to the metadata parsing module 205 which extracts metadata from the information of an image stored in storage 110.

The metadata extracted by the parsing module 205 is produced as metadata 210. This metadata 210 is made available to the intent metadata extraction module 215 and the GUI modification module. The intent metadata extraction module 215 filters the metadata 210 to select intent metadata 220. That is, the intent metadata parsing module 215 operates on and selects intent type metadata 220 from the full complement of available metadata 210. It is this intent metadata 220 which represents the photographer's intent upon image capture. Alternately, the intent metadata 220 can be metadata that is altered after image capture. In either event, the intent metadata is provided to the GUI modification module 120 is used to generate a compatible input of a set of possible editing function that the image or video editing software 125 can use. Metadata 210 is also provided directly to the GUI modification module 120 for the purpose of, for example, adjusting the default parameters of the associated image editing tool.

In the current configuration, the image or video editing software resident in image editing device 170 may be commercially available software installed on device 170. In one scenario, a user can open the content of the set of possible editing functions specific to the image being subject to editing as a tab or other content list in the editor of editing software 125. The graphical user interface of the editing software 125 may have no relation with the image capturing device 160 of Figure 1.

The elements of the metadata processing unit 115 and the GUI modification unit 120 can be understood as applying effects/filters to the image information content of storage 110 to modify/enhance the image content while respecting the initial artistic intention of the photographer. In general, the configuration of Figures 1 and 2 addresses the need for a user interface that directs a user to specific editing functions of a commercial video editing/photo editing tool based on the metadata that is contained in the video image or photo image itself and user settings in metadata representing the photographer intentions. The configuration provides a tab or other add-on or plug-in to execute in software in a commercial image editor.

In one aspect of the disclosure, when opening a file in an image or video editing software, the present configuration modifies the standard software GUI in that it adds a new "Suggestions" tab in the usual menu ribbon and fills this new tab with the list of editing functions, such as effects, filters, or operations deduced from the metadata of the opened file.

In another embodiment of the disclosure, the GUI is modified in that the suggested operations appear in a dedicated toolbox or dialog window. In another embodiment of the disclosure, the GUI is modified in that the order of the items in the different existing tools or effects or filters list is changed so that the suggested operations appear on the top of the list, are presented in a colored or highlighted manner, are expressed in bold or italic type, or special graphic form and the like.

For example, if the scene shooting mode EXIF metadata indicates that the picture was captured in "portrait" mode, red eye removal, skin smoothing and teeth whitening operations could be part of that "Suggestions" list. If the scene shooting mode EXIF metadata indicates that the picture was captured in "snow" mode, the "Suggestions" list could include an "Add falling snow animation ..." to create a GIF image by combining the input picture with an existing "falling snow" animation.

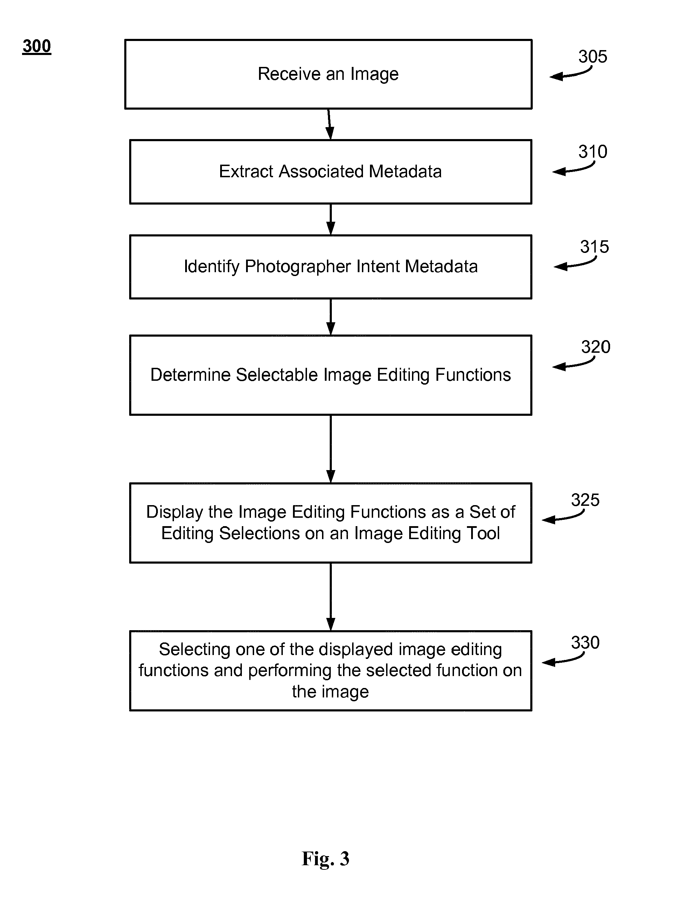

Figure 3 represents an example flow diagram 300 of a method according to aspects of the configuration. At step 305, an image captured by a camera is received. The image or video has associated metadata concerning the image. In one embodiment, the related metadata is generated at the time of the image capture. In another embodiment, the metadata is modified after image capture. In either event, the metadata associated with the image is extracted in step 310. The extracted metadata is related to the specific image or video that is the subject of image editing.

At step 315, the specific metadata that represent the intent of the photographer is identified or filtered from all of the extracted metadata. This filtered photographer's intent metadata is processed in step 320 to determine one or more selectable image editing functions to be performed by an image editing tool. At step 325, the one or more image editing functions are displayed as editing selections on the user interface of the image editing tool. In one embodiment, the editing selections are displayed as an add-on (plug-in) tab or list display of editing options available to the image editing tool. The image editing tool can be either a custom image editing tool or a commercial image editing tool that allows the editing function developed from the photographer's intent metadata to be displayed. In one embodiment, the display and editing functionality of the configuration can result via action of a plug-in to the image editing software tool that specifically utilized the determined editing function for the specific image being edited. Thus, the photographer's intent metadata is used to provide a suggestion of editing functions to perform. At step 330, one of the suggested image editing functions that is displayed can be selected such that the selected image editing function is performed on the image.

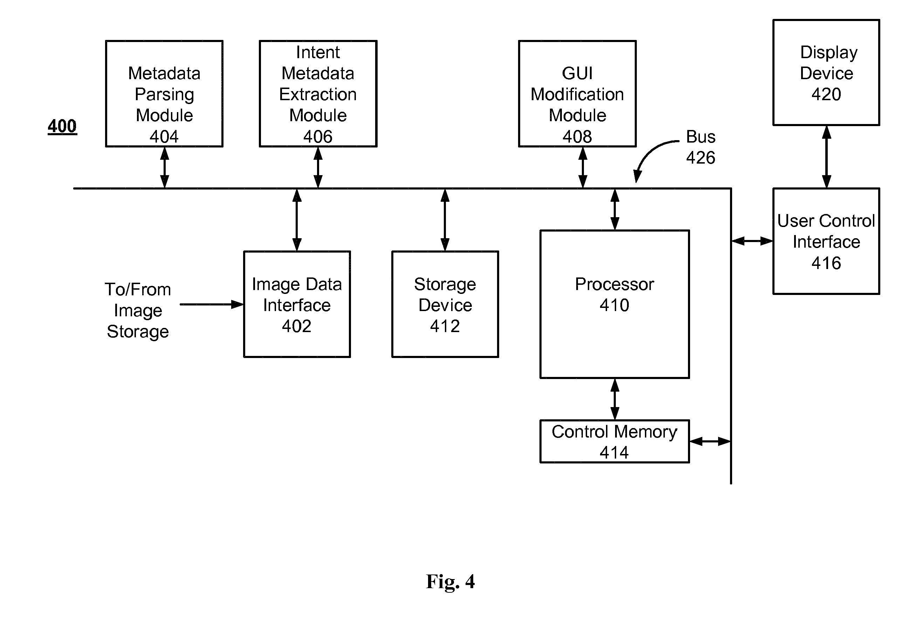

Figure 4 depicts an apparatus 400 embodiment of an image editing device 170 according to principles of the current configuration. An image and its respective metadata is input into the image data interface 402 of the apparatus. The image and its respective metadata are available in the image storage 110 of Figure 1. In one embodiment, the image storage 110 is also included in the apparatus 400. In the embodiment of Figure 4, image data interface 402 receives the image and its metadata and makes the metadata available on bus 426. Storage device 412 may be used for image and metadata storage as needed. Bus 426 is used to interconnect internal and external interfaces to the processor 410 which directs activities in apparatus 400.

Processor 410 controls the processing of data throughout apparatus 400 with assistance from executable instructions from control memory 414. The processor can instruct the metadata processing module 404 to extract metadata from the combination of image and related metadata received by interface 402 and stored in storage device 412. Extracted metadata, such as metadata 210 of Figure 2 may be placed in storage 412 or may be processed more quickly by transferal to the intent metadata filtering module 406. This module filters and extracts out the specific metadata that is specific to the photographer's intent, such as intent metadata.

Once again, this filtered or extracted intent metadata may be stored in storage device 412 or may be transferred not speedily to the GUI modification module 408. The GUI modification module generates the options available for editing the image being processed by using the intent metadata, such as intent metadata 220 of Figure 2. This intent metadata is used in the GUI modification module 408 as an input to determine the options for image editing. Once image editing options are determined, the options can be sent to the user for consideration via user control interface 416 and display device 420.

In one embodiment, image editing software, such as that shown in Figure 2 as 125, may be resident on the apparatus 400 as executable instructions in storage device 412 or control memory 414. The options for editing determined by the GUI modification module can be included in an execution of image editing software 125 as a program add-on or plug-in. As such the image editing software 125 is an image editing tool that picks up the editing options information and provides it to the user via display 420 as an editing tab, a list of additional editing functions, a prioritized list, and the like within the user interface of the image editing software 125 which is the image editing tool that the users engages to edit the image of interest.

In one embodiment, apparatus 400 can implement the metadata parsing module 404, the intent extraction module, and the GUI modification module as separate dedicated processing blocks as shown in Figure 4. These modules can also be combined into one dedicated processing unit, such as processor 410. Alternately, these modules can be implemented in software to execute a similar function. In such an embodiment, processor 410 can execute software instructions that perform the functions of Figure 3.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, or via a combination of a hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art. The instructions thus stored are useful to execute elements of hardware and software to perform the steps of the method described herein.

## Claims

1. A method for displaying a menu of editing functions within a user interface of an image editing tool, the method performed by an apparatus that includes the image editing tool, the method comprising:
a. receiving an image captured by a camera, the image having associated metadata concerning the image (305);
b. extracting the associated metadata of the image (310);
c. filtering the associated metadata to select metadata related to photographer's intent (315);
d. processing the selected metadata to determine one or more selectable image editing functions to be performed by the image editing tool (320);
e. displaying the one or more image editing functions as editing selections on the user interface of the image editing tool (325).

2. The method of claim 1, wherein the camera is separate from the image editing tool.

3. The method of claim 1, wherein the one or more selectable image editing functions are displayed on the user interface of the image editing tool via a plug-in to the image editing tool.

4. The method of claim 1, wherein the associated metadata is generated by the camera at the time the image was captured.

5. The method of claim 1, further comprising selecting one of the image editing functions and performing the selected function upon the image.

6. An apparatus for generating editing options for an image editing tool, the apparatus comprising:
a data interface for receiving image data and associated metadata (402);
a metadata parsing module that extracts the associated metadata from the image data and associated metadata (404);
an intent metadata extraction module that filters the extracted associated metadata to produce intent metadata that represents the intent of a photographer that is captured in the image data (406);
a graphical user interface modification module that generates editing options for the image data based on the intent metadata (408);
a processor, connected to memory, that includes the editing options into a graphical user interface of an image editing tool (410); and
a display to present the editing options within the graphical user interface of the image editing tool (420).

7. The apparatus of claim 6, wherein the processor controls actions of the metadata parsing module, the intent metadata extraction module, and the graphical user interface modification module.

8. The apparatus of claim 6, further comprising a camera for image capture.

9. The apparatus of claim 8, wherein the camera generates the associated metadata upon image capture.

10. The apparatus of claim 9, wherein the associated metadata is modified prior to receipt by the data interface.

11. A method for selecting editing functions in an image editing tool, the method performed by an apparatus that includes the image editing tool, the method comprising:
processing metadata associated with an image to be edited in said image editing tool to determine one or more selectable image editing functions to be performed by the image editing tool (310, 315, 320); and
providing said selected image editing functions to edit said image (325).

12. A method according to claim 11, wherein said processing of metadata is performed on metadata related to an initial artistic expression of the photographer.

13. The method of claim 11, wherein the one or more selectable image editing functions are displayed on a user interface of the image editing tool via a plug-in to the image editing tool.

14. The method of claim 11, wherein the metadata associated with an image to be edited is generated by the camera at the time the image was captured.
